# EUROPÄISCHE PATENTANMELDUNG

(11) **EP 2 679 692 A1**
(43) Veröffentlichungstag der Anmeldung: **01.01.2014**
(21) Anmeldenummer: 12401128.9
(22) Anmeldetag: 29.06.2012
(51) Int. Cl.: C21D 1/673, C21D 9/46, C21D 1/09, C21D 1/42, C21D 8/02

(54) **Verfahren zur Herstellung eines pressgehärteten Formbauteils aus Stahlblech**

(71) Anmelder: GEDIA Gebrüder Dingerkus GmbH, 57439 Attendorn (DE); Friedrich-Alexander-Universität Erlangen-Nürnberg, 91054 Erlangen (DE); GM Global Technology Operations LLC, Detroit, MI 48265-3000 (US)
(72) Erfinder: Buhr, Wolfgang, 57076 Siegen (DE); Winderlich, Maik, 57489 Drolshagen (DE); Kaupper, Markus, 91301 Forchheim (DE); Lechner, Michael, 91710 Gunzenhausen (DE); Wieland, Michael, 90425 Nürnberg (DE); Merklein, Marion, 90425 Nürnberg (DE); Krammer, Petra, 64625 Bensheim (DE); Renger, Lutz, 55545 Bad Kreuznach (DE)
(74) Vertreter: Köchling, Conrad-Joachim

(57) **Zusammenfassung**

Die Erfindung betrifft ein Verfahren zur Herstellung eines pressgehärteten Formbauteils aus einer Platine aus ungehärtetem, warm umformbarem Stahlblech, wobei die Platine in einem Presswerkzeug zum Formbauteil umgeformt und pressgehärtet wird, so dass das Formbauteil teilweise hochfeste und teilweise duktile Bereiche aufweist, wobei die Platine vor dem Pressumformvorgang homogen auf eine Umformtemperatur von 450°C bis 700°C erwärmt wird, nachfolgend einzelne Bereiche der Platine in einem Zeitraum von einigen Sekunden auf eine höhere Temperatur von bis zu oder mehr als 900°C erwärmt wird und nachfolgend die Umformung und Härtung erfolgt.

## Beschreibung

Die Erfindung betrifft ein Verfahren zur Herstellung eines pressgehärteten Formbauteils aus einer Platine aus ungehärtetem, warm umformbarem Stahlblech, wobei die Platine in einem Presswerkzeug zum Formbauteil umgeformt und pressgehärtet wird, so dass das Formbauteil teilweise hochfeste und teilweise duktile Bereiche aufweist.

Im Stand der Technik sind verschiedene Verfahren zur Herstellung solcher pressgehärteter Formbauteile bekannt. Um mit solchen Formbauteilen unterschiedliche Zweckbestimmungen insbesondere in der Kraftfahrzeugtechnik erfüllen zu können, ist es bekannt, solche Formbauteile aus Stahlblech in solcher Weise zu formen und zu fertigen, dass das Formbauteil teilweise hochfeste Bereiche und teilweise duktile Bereich aufweist. In den hochfesten Bereichen liegt im Wesentlichen martensitisches Gefüge vor, während in den duktilen Bereichen, die eine geringere Festigkeit aufweisen, ein bainitisches Gefüge und/oder ferritisch/perlitisches Gefüge vorliegt.

Aus der DE 197 43 802 C2 ist ein entsprechendes Verfahren bekannt. Dort wird angegeben, dass eine Platine aus einem bestimmtem Stahl zunächst in partiellen Bereichen in einer Zeit von weniger als 30 Sekunden auf eine Temperatur zwischen 600°C und 900°C gebracht wird, worauf dann die wärmebehandelte Platine in einem Pressenwerkzeug zum Formbauteil umgeformt und dann das Formbauteil im Pressenwerkzeug vergütet wird. Es wird so ein Formbauteil erzeugt, welches teilweise hochfeste Bereiche, teilweise aber auch duktile Bereiche geringerer Festigkeit aufweist.

Die im Stand der Technik angegebene Verfahrensweise ist insofern nachteilig, als nämlich der Energieaufwand, um die Platine von Raumtemperatur auf 600°C bis 900°C zu erhitzen, sehr groß ist und die hierfür notwendige Zeit relativ lang ist. In Konsequenz ist dieses Verfahren hinsichtlich der Anwendung nicht kosteneffektiv.

Ausgehend von diesem Stand der Technik liegt der Erfindung die Aufgabe zugrunde, ein Verfahren gattungsgemäßer Art zu schaffen, welches hinsichtlich der aufzubringenden Energie, hinsichtlich des aufzuwendenden Zeitaufwandes und hinsichtlich der tatsächlichen Kosten bei der Fertigung von Massenteilen besonders effizient ist, so dass es zur Herstellung von maßgeschneiderten Presshärtebauteilen mit Bereichen unterschiedlicher Festigkeit vor allem für den Automobilbau geeignet ist.

Zur Lösung dieser Aufgabe schlägt die Erfindung vor, dass die Platine vor dem Pressumformvorgang homogen auf eine Umformtemperatur von 450°C bis 700°C erwärmt wird, nachfolgend einzelne Bereiche der Platine in einem Zeitraum von einigen Sekunden auf eine höhere Temperatur von bis zu oder auch mehr als 900°C erwärmt wird und nachfolgend die Umformung und Härtung erfolgt.

Im Unterschied zum Stand der Technik wird also die Platine vorerwärmt, indem sie nämlich vor dem Pressumformvorgang homogen auf eine Umformtemperatur von etwa 450°C bis 700°C erwärmt wird. Nachfolgend werden dann einzelne Bereiche der Platine in einem Zeitraum von einigen Sekunden auf eine höhere Temperatur erwärmt, beispielsweise auf eine Temperatur von bis zu oder auch mehr als 900°C (Austenitisierungstemperatur). Nachfolgend erfolgt dann die Umformung und Härtung. Durch diese Verfahrensweise wird der Energieaufwand im Vergleich zu konventionellen Verfahren und insbesondere dem werkzeugbasierten Tailored Tempering reduziert, weil nämlich nicht die gesamte Platine auf Austenitisierungstemperatur erwärmt werden muss, sondern die Platine wird nur vorerwärmt auf eine zur Umformung geeignete Temperatur. Diese Temperatur wird im weiteren Verfahren auch zur Umformung ausgenutzt. Vor allem ist diese Temperatur aber deswegen hilfreich, weil damit die nachfolgende Erwärmung einzelner Bereiche der Platine auf eine Temperatur von beispielsweise bis zu 930°C sehr schnell erfolgen kann, weil nur ein Temperatursprung von ca. 400°C bis 500°C erreicht werden muss, wobei diese Vorgehensweise energiesparend ist und auch zeitsparend, weil die partielle Erwärmung der einzelnen Bereiche in kurzer Zeit erfolgen kann.

Insgesamt führt dies auch zu einem kosteneffizientem Prozess zur Herstellung entsprechend erzeugter Formbauteile, die neben Bereichen geringerer Festigkeit und höherer Duktilität auch in den ausgewählten Bereichen hohe Festigkeit aufweisen.

Vorzugsweise ist zudem vorgesehen, dass die Platine auf eine Umformtemperatur von 550°C bis 650°C erwärmt wird.

Das Material der Platine kann unbeschichtet sein oder auch mit beliebigen Materialien beschichtet sein.

Sofern, wie dies bei der Erfindung bevorzugt vorgesehen ist, Stahlblechplatinen eingesetzt werden, die mit Aluminium/Silizium vorbeschichtet sind, so ist diese Ausgestaltung hilfreich. Die Vorbeschichtung dient als Verzunderungsschutz während der Wärmebehandlung/Austenitisierung beispielsweise in einem Ofen und während des Transfers der Platine von dem Ofen in das Umformwerkzeug. Im Ausgangszustand liegt ein zweiphasiges Eutektikum aus Aluminium und Silizium vor, dessen Schmelztemperatur mit ca. 577°C anzugeben ist. Diese Schmelztemperatur der Ausgangsbeschichtung wird durch zeit- und temperaturabhängige Diffusionsprozesse des Eisens aus dem Stahlblech/Grundmaterial kontinuierlich gesteigert. Jedoch laufen diese Diffusionsprozesse bei geringen Temperaturen lediglich langsam ab. Durch die homogene Vorwärmung der Platine, beispielsweise in einem Ofen, soll ein Aufschmelzen der Aluminium-Siliziumbeschichtung vermieden und einer etwaigen schlechten Ausbildung der Aluminium/Siliziumbeschichtung durch unzureichende Diffusion des Eisens bei zu rascher Erwärmung vorgebeugt werden. Als einer der möglichen Fehler einer unzureichenden Beschichtungsausbildung ist das Aufschmelzen der Beschichtung in Kombination mit einem Verlaufen bis hin zu einem Abtropfen der Beschichtung von der Platine zu nennen. Dies hätte zum einen die Ausbildung einer inhomogenen Schichtdicke durch Anhäufung und Verdrängen der Beschichtung zur Folge, was eventuell schlechtere Umformeigenschaften durch erhöhte Reibung im Werkzeug, schlechterer Widerstand der Aluminium-Siliziumbeschichtung gegen Abrasion und Adhäsion im Werkzeug, gesteigerte Tendenz zur Delamination der Beschichtung vom Stahlwerkstoff und damit verbunden eine Verschlechterung der Korrosionsbeständigkeit nach dem Presshärten nach sich zöge. Weitere Folgen durch die unzureichende Beschichtungsausbildung könnten eine Verschlechterung der Schweißeignung durch Ausbildung unterschiedlicher Phasen aus Aluminium, Eisen und Silizium sein sowie in einem Anwachsen der Beschichtung auf über 35µm bis 40µm bestehen, wodurch das pressgehärtete Bauteil mit den gängigen Schweißparametern zum Widerstandspunktschweißen als schlecht schweißbar einzustufen wäre. Durch die angegebenen Grenzbereiche der Vorwärmtemperatur zwischen 550°C und 700°C wird ein positiver Effekt erreicht. Bei 550°C wird ein Aufschmelzen der Beschichtung sicher vermieden. Vor allem mit zunehmender Haltezeit kann die Schmelztemperatur der Beschichtung aber weiter gesteigert werden, wodurch bis zu 700°C als sinnvoll anzusehen sind.

Bevorzugt ist zudem vorgesehen, dass die Erwärmung der einzelnen Bereiche mittels einer schnellwirksamen Heizeinrichtung erfolgt.

Bevorzugt kann dazu vorgesehen sein, dass die Erwärmung induktiv erfolgt.

Bevorzugt ist vorgesehen, dass die Erwärmung mittels photonischen Technologien, beispielsweise Laser erfolgt.

Die vorerwärmte Platine kann in dem angegebenen Zwischenschritt in Teilbereichen, Zonen oder Abschnitten mittels einer schnellwirksamen Heizeinrichtung erwärmt werden. Beispielsweise kann die Erwärmung mittels induktiver Technologien oder auch mittels Lasertechnologie erfolgen. In beiden Fällen ist eine berührungslose Erwärmung des Werkstückes in den gewünschten Teilbereichen möglich. Insbesondere bei der induktiven Erwärmung sollte eine Positionierung der Platine in Bezug auf die Induktorspulen exakt erfolgen, beispielsweise durch eine Halterung mit Abstandspositionierung, so dass eine Integration solcher Induktorspulen in eine Aufspannvorrichtung sinnvoll ist.

Infolge der Tatsache, dass die Platine vorerwärmt ist und nur in den ausgewählten Bereichen zusätzlich auf höhere Temperaturen erwärmt wird, ist eine sehr schnelle und effiziente Erwärmung mittels der angegebenen schnell wirksamen Heizeinrichtungen ermöglicht. Die Erwärmung erfolgt vorzugsweise in ausgewählten Bereichen der Platine auf eine Temperatur oberhalb der Austenitisierungstemperatur. Die Erwärmung der vortemperierten Platine erfolgt sehr schnell, beispielsweise innerhalb von 10 Sekunden oder auch schneller. Bei Versuchen wurde festgestellt, dass bei der Erwärmung der Bereiche mittels Lasertechnologie, wobei lediglich ein Temperaturunterschied von ca. 400°C überwunden werden muss, sich der Absorptionsgrad der Laserstrahlung generell mit zunehmender Temperatur verbessert, was durch die Voraufwärmung der Platine erreicht wird, so dass die Platine in den gewünschten Teilbereichen innerhalb von weniger als 10 Sekunden auf Austenitisierungstemperatur erwärmt werden kann.

Diese schnelle Aufheizzeit ist wiederum prozessbestimmend für das gesamte Fertigungsverfahren, also das Umformen der Platine in dem entsprechenden Werkzeug zu dem Formbauteil. Durch die erfindungsgemäße Verfahrensweise wird also das gesamte Herstellungsverfahren beschleunigt und die pro Zeiteinheit ausbringbare Stückzahl von Formbauteilen erhöht.

Hierzu ist insbesondere vorgesehen, dass die Erwärmung der einzelnen Bereiche auf eine Temperatur größer/gleich Ac3 erfolgt.

Zudem ist vorgesehen, dass die Erwärmung der einzelnen Bereiche innerhalb einer Zeit von kleiner/gleich 10 Sekunden erfolgt.

Auch kann vorgesehen sein, dass die Umformung und Presshärtung gleichzeitig erfolgt.

Dadurch, dass die Umformung und Presshärtung gleichzeitig erfolgt, indem nämlich die Presshärtung im Umformwerkzeug vorgenommen wird, wird das Verfahren besonders effektiv gestaltet. Allerdings ist es auch möglich, eine andere Verfahrensweise vorzunehmen, so dass auch vorgesehen sein kann, dass die Presshärtung zeitlich nach der Umformung erfolgt.

Entsprechende Verfahrensweisen sind an sich im Stand der Technik bekannt.

Um den gewünschten Zustand beizubehalten und einen Verzug des Werkstückes zu vermeiden, ist zudem vorgesehen, dass das pressgehärtete Bauteil bis zur Abkühlung mindestens der zu härtenden Bauteilbereiche auf eine Temperatur unter Martensit-Start-Temperatur von ca. 420°C im Umform-Presshärte-Werkzeug verbleibt.

Bevorzugt wird das Verfahren bei Platinen aus Bor-Mangan-Stahl, insbesondere 22 MnB5 eingesetzt. Insbesondere ist auch die Verwendung von mit Aluminium/Silizium vorbeschichteten Platinen bevorzugt.

Eine Vorrichtung zur Durchführung des Verfahrens besteht im Wesentlichen aus einer Aufheizvorrichtung zur homogenen Erwärmung einer Platine. Eine solche Aufheizeinrichtung kann beispielsweise ein Durchlaufofen oder eine Infrarotanlage sein, wobei die Platine von einem Coil abgelängt wird und beispielsweise über einen Zeitraum von 4 Minuten in der Aufheizeinrichtung erwärmt wird.

Zudem besteht die Vorrichtung aus einem üblichen Umform-Presswerkzeug zum Umformen der Platine zu einem Formbauteil, wobei das Presswerkzeug, wenn es gekühlt ist, gleichzeitig zum Härten eingesetzt werden kann oder aber es kann auch anschließend eine Einrichtung zum Härten der umgeformten Platine, also des fertigen Formbauteils vorgesehen sein. Erfindungsgemäß ist zwischen der Aufheizeinrichtung und dem Umformpresswerkzeug eine Heizvorrichtung angeordnet, mittels derer einzelne Bereiche der Platine auf eine Temperatur von bis zu oder mehr als 900°C erwärmbar sind.

Die Heizvorrichtung ist vorzugsweise als induktive oder photonische Heizvorrichtung ausgebildet, so dass also eine induktive Erwärmung oder auch eine Erwärmung mittels Laserstrahlen erfolgen kann. Insbesondere bei einer induktiven Vorrichtung ist bevorzugt vorgesehen, dass eine Einrichtung zur Fixierung der Platine während der Aufheizung mittels der Heizvorrichtung ausgebildet ist.

Hierbei soll eine exakte Positionierung der Platine in Bezug auf die Induktorspulen der Induktionsheizvorrichtung erfolgen. Beispielsweise kann dies in der Weise vorgenommen werden, dass eine Halterung mit Abstandspositionierung vorgesehen ist, die als Greifer oder Positionierung für die Platine ausgebildet ist, wobei in die Halterung oder deren Bestandteile Induktorspulen integriert sind, die hierdurch exakt positionierbar sind, um die gewünschten Bereiche zu erwärmen.

Mit dem erfindungsgemäßen Verfahren und mit der erfindungsgemäßen Vorrichtung ist es in äußerst effizienter Weise möglich, aus Stahlblechplatinen Formbauteile mit teilweise hoher Festigkeit und teilweise geringerer Festigkeit zu erzeugen, indem teilweise martensitisches Gefüge und teilweise bainitisches oder ferritisch perlitisches Gefüge im Formbauteil erzeugt wird. Hieraus lassen sich Bauteile gestalten und produzieren, die für den Automobilbau geeignet sind und bestimmten Anforderungen, beispielsweise hinsichtlich des Crash-Verhaltens, genügen.

## Patentansprüche

1. Verfahren zur Herstellung eines pressgehärteten Formbauteils aus einer Platine aus ungehärtetem, warm umformbarem Stahlblech, wobei die Platine in einem Presswerkzeug zum Formbauteil umgeformt und pressgehärtet wird, so dass das Formbauteil teilweise hochfeste und teilweise duktile Bereiche aufweist,
**dadurch gekennzeichnet, dass** die Platine vor dem Pressumformvorgang homogen auf eine Umformtemperatur von 450°C bis 700°C erwärmt wird, nachfolgend einzelne Bereiche der Platine in einem Zeitraum von einigen Sekunden auf eine höhere Temperatur von bis zu oder auch mehr als 900°C erwärmt wird und nachfolgend die Umformung und Härtung erfolgt.

2. Verfahren nach Anspruch 1,
**dadurch gekennzeichnet, dass** die Platine auf eine Umformtemperatur von 550°C bis 650°C erwärmt wird.

3. Verfahren nach Anspruch 1 oder 2,
**dadurch gekennzeichnet, dass** die Erwärmung der einzelnen Bereiche mittels einer schnellwirksamen Heizeinrichtung erfolgt.

4. Verfahren nach einem der Ansprüche 1 bis 3,
**dadurch gekennzeichnet, dass** die Erwärmung induktiv erfolgt.

5. Verfahren nach einem der Ansprüche 1 bis 3,
**dadurch gekennzeichnet, dass** die Erwärmung mittels photonischen Technologien, beispielsweise Laser erfolgt.

6. Verfahren nach einem der Ansprüche 1 bis 5,
**dadurch gekennzeichnet, dass** die Erwärmung der einzelnen Bereiche auf eine Temperatur größer /gleich Ac3 erfolgt.

7. Verfahren nach einem der Ansprüche 1 bis 6,
**dadurch gekennzeichnet, dass** die Erwärmung der einzelnen Bereich innerhalb einer Zeit von kleiner / gleich 10 Sekunden erfolgt.

8. Verfahren nach einem der Ansprüche 1 bis 7,
**dadurch gekennzeichnet, dass** die Umformung und Presshärtung gleichzeitig erfolgt.

9. Verfahren nach einem der Ansprüche 1 bis 7,
**dadurch gekennzeichnet, dass** die Presshärtung zeitlich nach der Umformung erfolgt.

10. Verfahren nach einem der Ansprüche 1 bis 8,
**dadurch gekennzeichnet, dass** das pressgehärtete Formbauteil bis zur Abkühlung mindestens der zu härtenden Bauteilbereiche auf eine Temperatur unter Martensit-Start-Temperatur von ca. 420°C im Umfom-Presshärte-Werkzeug verbleibt.

11. Verfahren nach einem der Ansprüche 1 bis 10,
**gekennzeichnet durch** die Verwendung einer Platine aus Bor-Mangan-Stahl, insbesondere 22 MnB5.

12. Verfahren nach einem der Ansprüche 1 bis 11,
**gekennzeichnet durch** die Verwendung von mit Aluminium-Silizium vorbeschichteten Platinen.

13. Vorrichtung zur Durchführung des Verfahrens nach einem der Ansprüche 1 bis 12, bestehend aus einer Aufheizeinrichtung zur homogenen Erwärmung einer Platine und einem Umform-Presswerkzeug zum Umformen der Platine zu einem Formbauteil und nachfolgendem oder gleichzeitigem Härten des Formbauteiles,
**dadurch gekennzeichnet, dass** zwischen Aufheizeinrichtung und Umform-Presswerkzeug eine Heizvorrichtung angeordnet ist, mittels derer einzelne Bereiche der Platine auf eine Temperatur von bis zu mehr als 930°C erwärmbar sind.

14. Vorrichtung nach Anspruch 13,
**dadurch gekennzeichnet, dass** die Heizvorrichtung als induktive oder photonische Heizvorrichtung ausgebildet ist.

15. Vorrichtung nach Anspruch 13 oder 14,
**dadurch gekennzeichnet, dass** eine Einrichtung zur Fixierung der Platine während der Aufheizung mittels der Heizvorrichtung ausgebildet ist.
